# FASCICULE DE BREVET EUROPEEN

(11) **EP 3 361 627 B1**
(45) Date de publication et mention de la délivrance du brevet: **07.10.2020**
(21) Numéro de dépôt: 18156502.9
(22) Date de dépôt: 13.02.2018
(51) Int. Cl.: H02P 29/60

(54) **ALTERNO-DÉMARREUR, VÉHICULE AUTOMOBILE ET PROCÉDÉ DE COMMANDE ASSOCIÉ**
STARTERGENERATOR, KRAFTFAHRZEUG UND ENTSPRECHENDES STEUERVERFAHREN
ALTERNATOR STARTER, MOTOR VEHICLE AND ASSOCIATED CONTROL METHOD

(30) Priorité: 14.02.2017 FR 1751178
(43) Date de publication de la demande: 15.08.2018
(73) Titulaire: VALEO EQUIPEMENTS ELECTRIQUES MOTEUR, 94046 Créteil Cedex (FR)
(72) Inventeur: CANITROT, Didier, 94046 CRETEIL CEDEX (FR); GUILLERM, Baptiste, 94046 CRETEIL CEDEX (FR); REBELO, Mario, 94046 CRETEIL CEDEX (FR)
(74) Mandataire: Duprez, Richard

(56) Documents cités:
- EP-A1- 2 928 050
- JP-A- 2009 303 365
- US-A1- 2012 133 313
- US-A1- 2013 064 268

## Description

La présente invention concerne le domaine des alterno-démarreurs et en particulier des alterno-démarreurs pour véhicules automobiles.

Les alterno-démarreurs sont de plus en plus utilisés dans les véhicules automobiles et notamment dans les véhicules électriques ou hybrides. Dans ces véhicules, de manière à limiter la consommation énergétique, des dispositifs de récupération de l'énergie dissipée lors du freinage appelés freinage régénératif ont été développés.

Cependant, avec de tels dispositifs, les valeurs de courant transmises au niveau des enroulements statoriques de l'alterno-démarreur lors d'un freinage régénératif peuvent être très élevées de sorte que dans certaines situations (par exemple un freinage pendant une durée importante, des freinages appuyés et successifs, avec une température ambiante élevée, etc.) la température au niveau des enroulements statoriques peut dépasser la limite de température du fonctionnement nominal de l'alterno-démarreur.

De manière à éviter tout dysfonctionnement ou toute détérioration de l'alterno-démarreur, il est connu de placer un capteur de température au niveau des enroulements statoriques pour contrôler la température au niveau de ces enroulements.

Ainsi, le capteur de température est généralement monté sur un élément élastique configuré pour contraindre le capteur de température contre les enroulements statoriques.

Cependant, certaines défaillances du capteur de température ou une défaillance de l'élément élastique ou d'un élément assurant le support du capteur de température pourraient ne pas être détectées de manière automatique (du fait par exemple d'une tension anormale) ce qui entraînerait une mesure de température erronée et pourrait conduire à une détérioration de l'alterno-démarreur pouvant conduire à une panne du véhicule automobile.

Le document US2012/0133313 décrit un alterno-démarreur suivant le préambule de la revendication 1.

Il convient donc de trouver une solution permettant d'éviter ou de détecter une mesure erronée du capteur de température. De plus, les contraintes économiques dans le milieu de l'automobile étant très fortes, il convient de trouver une solution économique ne nécessitant pas ou peu d'équipements supplémentaires.

A cet effet, la présente invention concerne un alterno-démarreur de véhicule automobile comprenant :
- des enroulements de phase statoriques,
- un onduleur relié aux enroulements de phase statoriques et configuré pour alimenter un réseau électrique de bord lors d'un fonctionnement en mode alternateur,
- un premier capteur de température configuré pour mesurer la température des enroulements de phase statoriques,
- un module de commande de l'onduleur comprenant un deuxième capteur de température destiné à mesurer la température ambiante,
dans lequel le module de commande est configuré pour comparer les valeurs des températures mesurées par le premier et le deuxième capteurs de température lors d'un fonctionnement en mode alternateur et pour détecter une mesure erronée du premier capteur de température à partir de ladite comparaison.

L'utilisation d'un capteur du module de commande pour détecter un dysfonctionnement du capteur de température configuré pour la température des enroulements de phase statoriques permet une détection d'une défaillance ou d'un dysfonctionnement sans avoir besoin d'un capteur dédié supplémentaire, le capteur du module de commande étant utilisé par ailleurs pour déterminer la température ambiante.

Selon un autre aspect de la présente invention, le premier capteur est disposé au niveau des enroulements statoriques et le deuxième capteur est disposé à une distance d'au moins cinq centimètres des enroulement statoriques.

Selon un aspect supplémentaire de la présente invention, une mesure erronée du premier capteur de température est détectée lorsque la différence de température mesurée entre le premier et le deuxième capteurs de température est inférieure à un seuil prédéterminé après un intervalle de temps de fonctionnement prédéterminé.

Selon un aspect additionnel de la présente invention, le module de commande est configuré pour émettre une alarme lorsqu'une mesure erronée du premier capteur de température est détectée.

Selon un autre aspect de la présente invention, le module de commande est configuré pour limiter le courant transmis au niveau de l'onduleur en mode alternateur de manière à limiter la température au niveau des enroulements de phase statoriques lorsqu'une ou plusieurs mesures erronées du premier capteur de température sont détectées.

Selon un aspect supplémentaire de la présente invention, le module de commande est configuré pour inhiber un mode freinage récupératif pour limiter le courant transmis au niveau de l'onduleur en mode alternateur.

Selon un aspect additionnel de la présente invention, le premier capteur de température est fixé sur un élément élastique, ledit élément élastique étant configuré pour contraindre le premier capteur de température en contact avec les enroulements de phase statoriques.

Selon un autre aspect de la présente invention, l'alterno-démarreur comprend également une unité de mesure du courant transmis au niveau des enroulements de phase statoriques, le module de commande étant configuré pour :
- incrémenter un compteur avec une valeur d'incrément dépendant de la valeur du courant mesuré pendant une durée prédéterminée,
si l'intervalle de temps de fonctionnement prédéterminé est écoulé,
- comparer les valeurs des températures mesurées par le premier et le deuxième capteurs de température lorsque le compteur atteint une valeur prédéterminée,
- émettre une alarme et réduire la puissance transmise au niveau des enroulements de phase statoriques si l'écart entre les valeurs des températures mesurées par le premier et le deuxième capteurs de température est inférieur à un seuil prédéterminé,
- remettre à zéro le compteur.

La présente invention concerne également un véhicule automobile comprenant un alterno-démarreur tel que décrit précédemment.

La présente invention concerne également un procédé de commande d'un alterno-démarreur pour véhicule automobile, ledit alterno-démarreur comprenant :
- des enroulements de phase statoriques,
- un onduleur relié aux enroulements de phase statoriques configuré pour alimenter un réseau électrique de bord à partir des courants transmis au niveau des enroulements de phase statoriques lors d'un fonctionnement en mode alternateur,
- un premier capteur de température configuré pour mesurer la température des enroulements de phase statoriques,
- un module de commande de l'onduleur comprenant un deuxième capteur de température destiné à mesurer une température ambiante,
dans lequel :
- lorsque l'on commande l'onduleur en mode alternateur pour alimenter un réseau électrique de bord, on compare les valeurs des températures mesurées par le premier et le deuxième capteurs de température et,
- on détecte une mesure erronée du premier capteur de température lorsque l'écart entre les valeurs des températures mesurées par le premier et le deuxième capteur de température est inférieur à un écart prédéterminé après un temps de fonctionnement prédéterminé d'utilisation de l'onduleur en mode alternateur.

Selon un autre aspect de la présente invention, le procédé de commande comprend également les étapes suivantes:
- on mesure le courant transmis au niveau des enroulements de phase statoriques,
- après une durée prédéterminée (Δt'), on incrémente un compteur avec une valeur d'incrément dépendant de la valeur du courant mesuré,
- lorsque le compteur atteint une valeur prédéterminée, si l'intervalle de temps de fonctionnement prédéterminé (Δt3) est écoulé, on effectue l'étape de comparaison entre les valeurs des températures mesurées par le premier (14) et le deuxième (16) capteurs de température,
- si l'écart entre les mesures est inférieur à un seuil prédéterminé,
   - on émet une alarme, on réduit la puissance transmise au niveau des enroulements de phase statoriques et on remet à zéro le compteur,
      sinon,
   - on remet à zéro le compteur.

Selon un aspect supplémentaire de la présente invention, pour réduire la puissance transmise au niveau des enroulements de phase statoriques, on inhibe la fonction de freinage récupératif.

D'autres caractéristiques et avantages de l'invention ressortiront de la description suivante, donnée à titre d'exemple et sans caractère limitatif, en regard des dessins annexés sur lesquels :
- la figure 1 représente un schéma d'un alterno-démarreur et des éléments de commande de l'alterno-démarreur ;
- la figure 2a représente un graphique représentant l'évolution des températures mesurées par le premier et le deuxième capteur en fonction du temps pour un fonctionnement normal ;
- la figure 2b représente un graphique représentant l'évolution des températures mesurées par le premier et le deuxième capteur en fonction du temps lors d'un dysfonctionnement du premier capteur ;
- la figure 3 représente un tableau représentant un exemple d'équivalence entre l'intensité du courant et l'incrément du compteur utilisé pour déclencher une comparaison de température ;
- la figure 4 représente un exemple d'évolution au cours du temps du compteur déclenchant une comparaison de température.

Sur toutes les figures, les éléments ayant des fonctions identiques portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation ou que les caractéristiques s'appliquent seulement à un seul mode de réalisation. De simples caractéristiques de différents modes de réalisation peuvent également être combinées ou inter-changées pour fournir d'autres réalisations.

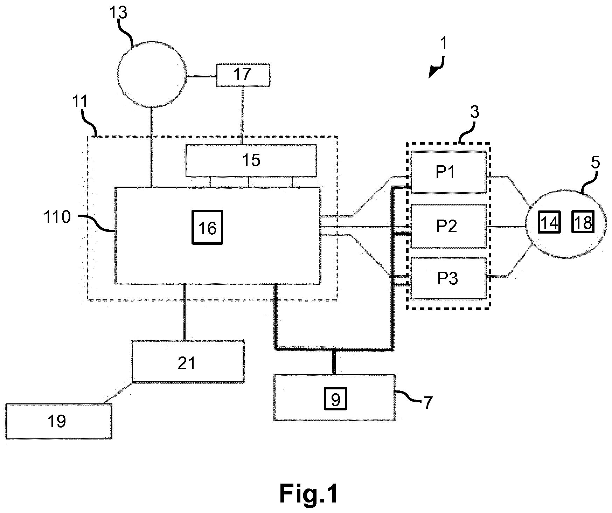

La présente invention concerne un alterno-démarreur notamment pour véhicule automobile. La figure 1 représente un schéma des éléments de commande d'un alterno-démarreur 1. L'alterno-démarreur 1 comprend un onduleur 3 qui permet de convertir une tension continue en tension alternative et inversement. L'onduleur 3 comprend trois modules de puissance notés P1, P2 et P3 associés respectivement aux trois phases ou enroulements d'un stator 5. Alternativement, le stator 5 peut comprendre six phases et l'onduleur associé peut comprendre trois ou six modules de puissance. En mode démarreur, l'onduleur 3 est alimenté par un réseau électrique de bord 7 comprenant une batterie 9 délivrant une tension continue et en mode alternateur, l'onduleur 3 joue le rôle de redresseur pour convertir la tension alternative fournie au niveau des enroulements de phase du stator 5 par la rotation d'un rotor 13 et la convertir en tension continue destinée à recharger la batterie 9 du réseau électrique de bord 7. L'onduleur 3 est associé à un module de commande 11 configuré pour piloter l'onduleur 3. En mode alternateur, le module de commande 11 est configuré pour piloter l'ouverture et la fermeture des interrupteurs de l'onduleur 3 de manière à obtenir une tension continue adaptée à la batterie 9. Le module de commande 11 peut comprendre un ou plusieurs capteurs de position 15, par exemple des capteurs à effet Hall couplé à une cible 17, par exemple un aimant permanent, positionnée sur le rotor 13 pour déterminer la position du rotor 13. Le module de commande 11 peut également être relié à un ordinateur de bord 19 du véhicule via une interface 21 telle qu'un câble ou une interface de communication sans fil, notamment bluetooth® ou Wifi™.

De plus, l'alterno-démarreur 1 comprend un premier capteur de température 14 disposé au niveau des enroulements ou bobines du stator 5 pour contrôler l'évolution de la température de ces derniers au cours du temps et éviter que les enroulements statoriques restent à une température supérieure à un premier seuil prédéterminé, par exemple 250°C, pendant une durée supérieure à un deuxième seuil prédéterminé, par exemple 20 secondes.

Le premier capteur de température 14 est par exemple une thermistance à coefficient de température négatif (CTN). Le premier capteur de température 14 est par exemple monté sur un élément élastique, tel qu'un ressort, fixé sur un support, l'élément élastique étant configuré pour maintenir le premier capteur de température 14 en contact avec un enroulement statorique.

Par ailleurs, le module de commande 11 comprend une unité de traitement 110 par exemple un circuit intégré de type ASIC (circuit intégré dédié à une application, « application-specific integrated circuit ») ou un microcontrôleur ou un microprocesseur. Le module de commande 11 comprend également un deuxième capteur de température 16 qui peut être interne à l'unité de traitement 110 et qui est destiné à mesurer la température ambiante au niveau du module de commande. La température ambiante mesurée permet notamment de déterminer la puissance que l'onduleur 3 peut fournir. Le deuxième capteur de température 16 est donc distant du premier capteur de température 14, par exemple d'une distance de quelques centimètres, notamment supérieure à 5 centimètres. Le module de commande 11 est généralement placé à distance des enroulements statoriques pour ne pas trop subir les variations de températures liées au courants traversant les enroulements. De plus, le premier 14 et le deuxième 16 capteurs de température peuvent être séparés par au moins une paroi tel qu'un carter du module de commande 11.

De plus, le module de commande 11 et en particulier l'unité de traitement 110 est configuré pour comparer au cours du temps les mesures issues du premier 14 et du deuxième 16 capteurs de température de manière à détecter une mesure erronée du premier capteur de température 14.

Selon un premier mode de réalisation, la comparaison entre les mesures du premier 14 et du deuxième 16 capteurs de température est réalisée lors de l'utilisation de l'alterno-démarreur 1 en mode alternateur après l'écoulement d'un intervalle de temps prédéterminé Δt3 puis à chaque durée prédéterminée Δt', par exemple toutes les 5 secondes.

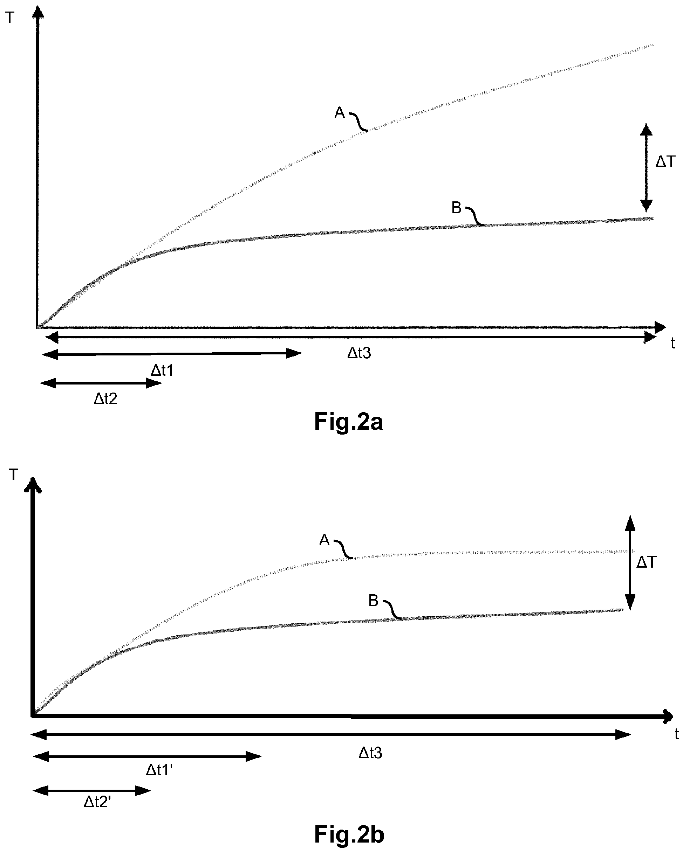

La figure 2a représente un exemple d'évolution au cours du temps des mesures réalisées par le premier 14 (courbe A) et le deuxième 16 (courbe B) capteurs de température lors d'une utilisation en mode alternateur.

La température mesurée par le premier capteur de température 14 augmente rapidement dans un premier temps correspondant par exemple à un intervalle de temps Δt1 de quelques secondes puis continue d'augmenter de façon sensiblement linéaire par la suite. La température ne cesse donc d'augmenter pendant l'utilisation en mode alternateur.

La température mesurée par le deuxième capteur de température 16 augmente rapidement dans un premier temps correspondant par exemple à un intervalle de temps Δt2 de quelques secondes puis se stabilise au niveau d'un palier. Ainsi, après un intervalle de temps prédéterminé Δt3 correspondant par exemple à une minute, la température mesurée par le premier capteur de température 14 est nettement supérieure à la température mesurée par le deuxième capteur de température 16 de sorte que l'écart de température est supérieur à un intervalle de température ΔT prédéfini, par exemple 50°C.

La figure 2b représente un exemple d'évolution au cours du temps des mesures réalisées par le premier 14 et le deuxième 16 capteurs de température lors d'une utilisation en mode alternateur dans le cas d'une mesure erronée du premier capteur de température 14. Dans ce cas, la mesure erronée est par exemple due à une défaillance de l'élément élastique de sorte que le premier capteur de température n'est plus positionné contre les enroulements statoriques mais situé à distance des éléments statoriques, par exemple 1 ou 2 cm.

Dans ce cas, la courbe A de mesure du premier capteur de température 14 augmente rapidement dans un premier temps Δt1' correspondant par exemple à un intervalle de temps de quelques secondes puis se stabilise au niveau d'un palier. Ce palier est supérieur au palier auquel se stabilise le deuxième capteur de température 16 après un intervalle de temps Δt2' puisque le premier capteur de température 14 est toujours positionné plus près de la source de chaleur formée par les enroulements statoriques mais l'écart de mesure, après un intervalle de temps prédéterminé Δt3, entre le premier 14 et le deuxième 16 capteur de température est inférieur à l'intervalle de température prédéfini ΔT.

Ainsi, il est possible de déterminer un ou plusieurs intervalles de temps prédéterminé Δt3 et un ou plusieurs intervalles de température ΔT. Lors du fonctionnement de l'alterno-démarreur en mode alternateur, après un temps d'utilisation correspondant au temps prédéterminé Δt3, on peut comparer, à intervalles de temps réguliers, la différence entre les mesures de température des deux capteurs 14 et 16 avec l'intervalle de température prédéfini ΔT. Lorsque la différence de température entre les deux mesures est inférieure à l'intervalle prédéfini ΔT, une alarme peut être émise et la puissance transmise au niveau des enroulements de phase statoriques est réduite de manière à éviter un endommagement de l'alterno-démarreur 1. L'alarme correspond par exemple à l'éclairage d'un voyant de contrôle au niveau du tableau de bord du véhicule. La réduction de la puissance transmise est par exemple réalisée en inhibant la fonction de freinage régénératif ou freinage récupératif de l'alterno-démarreur 1.

Selon un deuxième mode de réalisation, de manière à cibler les mesures et comparaisons seulement lorsque les risques de surchauffe au niveau des enroulements statoriques sont élevés, les instants de mesures et de comparaison sont déterminés en fonction de l'intensité du courant transmis au niveau des enroulements statoriques. Pour cela, une unité de mesure 18 de l'intensité du courant est par exemple disposée au niveau du stator 5 et on ajuste un compteur avec différents incréments associés à des valeurs d'intensité du courant. L'unité de mesure est par exemple déjà présente pour contrôler le bon fonctionnement du moteur.

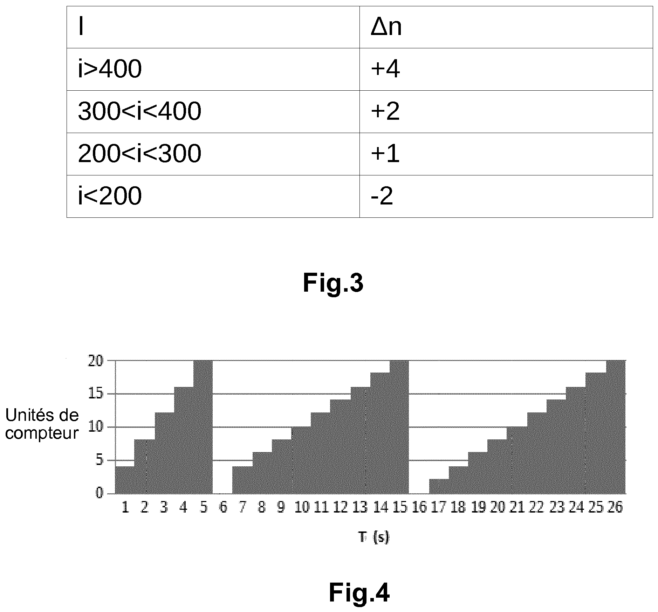

Le tableau de la figure 3 montre un exemple comprenant quatre intervalles d'intensité respectivement supérieur à 400A, entre 300et 400A, entre 200et 300A et inférieur à 200A et les incréments associés, respectivement +4, +3, +2 et -2. Ainsi, l'évolution de la mesure du courant est surveillée de sorte qu'à chaque durée prédéterminée Δt", par exemple une seconde (soit on réalise une mesure par unité de temps correspondant à la durée prédéterminée Δt" soit on fait une moyenne sur cette durée prédéterminée Δt") et en fonction de l'intensité mesurée, on incrémente le compteur de l'incrément correspondant et lorsque le compteur atteint un seuil prédéterminé, par exemple 20 unités, et que l'on a atteint l'intervalle de temps prédéterminé Δt3, on mesure les températures avec le premier 14 et le deuxième 16 capteurs de température et on compare la différence entre les deux mesures avec l'intervalle prédéfini ΔT. Le compteur est alors remis à zéro. L'incrément négatif permet de faire redescendre le compteur lorsque l'intensité est faible ce qui permet de faire redescendre la température après une utilisation à forte intensité. Le compteur reste toujours positif.

La figure 4 représente un exemple d'évolution du compteur pour un alterno-démarreur 1 utilisé en mode alternateur dont le courant débité est de 450A pendant 7 secondes puis de 350A. La durée prédéterminée Δt" est de une seconde de sorte que les mesures d'intensité sont réalisées chaque seconde. On suppose ici que le temps Δt3 est déjà écoulé. La valeur des incréments est donnée par le tableau de la figure 3 ainsi, lors de premières secondes, le compteur est incrémenté de 4 unités chaque seconde jusqu'à la cinquième seconde où le seuil de 20 unités est atteint. Des mesures de température avec le premier 14 et le deuxième 16 capteurs de température sont alors réalisées et une comparaison entre la différence de température et l'intervalle prédéfini ΔT est réalisée. Le compteur est alors remis à zéro et à nouveau incrémenté de 4 unités à la septième seconde. A la huitième seconde, l'intensité du courant passe à 350A de sorte que l'incrément est alors de deux unités de sorte que le seuil de 20 unités est atteint à la quinzième seconde et des nouvelles mesures de températures et une nouvelle comparaison sont réalisées et le compteur est remis à zéro. L'intensité étant maintenue à 350A, le compteur continue à augmenter par incrément de 2 unités jusqu'à la 26ème seconde où il atteint à nouveau le seuil de 20 unités et une nouvelle comparaison est réalisée.

Ainsi, l'utilisation d'un tel compteur dont l'incrément dépend de l'intensité du courant débité au niveau de l'alterno-démarreur 1 permet de réduire le nombre de mesures de température et de comparaison et de réaliser ces mesures et ces comparaisons de manière rapprochée lorsque le risque de surchauffe de l'alterno-démarreur 1 est fort.

La présente invention vise également un véhicule équipé d'un alterno-démarreur 1 tel que décrit précédemment.

L'utilisation d'un deuxième capteur de température 16 présent au niveau du module de commande 11 et configuré pour déterminer la température ambiante afin de détecter une mesure erronée de la température des enroulements statoriques en comparant la différence entre les températures mesurées par le premier capteur 14 dédié à la mesure des températures des enroulements statoriques et le deuxième capteur 16 avec un intervalle de température prédéfini ΔT permet ainsi de réaliser cette détection sans nécessité de matériel supplémentaire. De plus, l'utilisation d'un compteur incrémenté en fonction de l'intensité du courant débité par l'alterno-démarreur 1 pour déterminer les instants de mesure et de comparaison permet de réduire le nombre de mesure et de comparaisons ce qui permet de limiter la consommation énergétique liée à cette détection et d'améliorer la durée de vie des équipements liés à cette détection.

## Revendications

1. Alterno-démarreur (1) de véhicule automobile comprenant :
- des enroulements de phase statoriques,
- un onduleur (3) relié aux enroulements de phase statoriques et configuré pour alimenter un réseau électrique de bord (7) lors d'un fonctionnement en mode alternateur,
- un premier capteur de température (14) configuré pour mesurer la température des enroulements de phase statoriques,
- un module de commande (11) de l'onduleur (3) comprenant un deuxième capteur de température (16) destiné à mesurer la température ambiante,
**caractérisé en ce que** le module de commande (11) est configuré pour comparer les valeurs des températures mesurées par le premier (14) et le deuxième (16) capteurs de température lors d'un fonctionnement en mode alternateur et pour détecter une mesure erronée du premier capteur de température (14) à partir de ladite comparaison.

2. Alterno-démarreur (1) selon la revendication 1 dans lequel le premier capteur (14) est disposé au niveau des enroulements statoriques et le deuxième capteur (16) est disposé à une distance d'au moins cinq centimètres des enroulement statoriques.

3. Alterno-démarreur (1) selon la revendication 1 ou 2 dans lequel une mesure erronée du premier capteur de température (14) est détectée lorsque la différence de température mesurée entre le premier (14) et le deuxième (16) capteurs de température est inférieure à un seuil prédéterminé (ΔT) après un intervalle de temps de fonctionnement prédéterminé (Δt3).

4. Alterno-démarreur (1) selon l'une des revendications précédentes dans lequel le module de commande (11) est configuré pour émettre une alarme lorsqu'une mesure erronée du premier capteur de température (14) est détectée.

5. Alterno-démarreur (1) selon l'une des revendications précédentes dans lequel le module de commande (11) est configuré pour limiter le courant transmis au niveau de l'onduleur (3) en mode alternateur de manière à limiter la température au niveau des enroulements de phase statoriques lorsqu'une ou plusieurs mesures erronées du premier capteur de température (14) sont détectées.

6. Alterno-démarreur (1) selon la revendication 5 dans lequel le module de commande (11) est configuré pour inhiber un mode freinage récupératif pour limiter le courant transmis au niveau de l'onduleur (3) en mode alternateur.

7. Alterno-démarreur (1) selon l'une des revendications précédentes dans lequel le premier capteur de température (14) est fixé sur un élément élastique, ledit élément élastique étant configuré pour contraindre le premier capteur de température (14) en contact avec les enroulements de phase statoriques.

8. Alterno-démarreur (1) selon l'une des revendications précédentes comprenant également une unité de mesure (18) du courant transmis au niveau des enroulements de phase statoriques, le module de commande (11) étant configuré pour :
- incrémenter un compteur avec une valeur d'incrément dépendant de la valeur du courant mesuré pendant une durée prédéterminée (Δt'),
si l'intervalle de temps de fonctionnement prédéterminé (Δt3) est écoulé,
- comparer les valeurs des températures mesurées par le premier (14) et le deuxième (16) capteurs de température lorsque le compteur atteint une valeur prédéterminée,
- émettre une alarme et réduire la puissance transmise au niveau des enroulements de phase statoriques si l'écart entre les valeurs des températures mesurées par le premier (14) et le deuxième (16) capteurs de température est inférieur à un seuil prédéterminé (ΔT),
- remettre à zéro le compteur.

9. Véhicule automobile comprenant un alterno-démarreur (1) selon l'une des revendications précédentes.

10. Procédé de commande d'un alterno-démarreur (1) pour véhicule automobile, ledit alterno-démarreur (1) comprenant :
- des enroulements de phase statoriques,
- un onduleur (3) relié aux enroulements de phase statoriques configuré pour alimenter un réseau électrique de bord (7) à partir des courants transmis au niveau des enroulements de phase statoriques lors d'un fonctionnement en mode alternateur,
- un premier capteur de température (14) configuré pour mesurer la température des enroulements de phase statoriques,
- un module de commande (11) de l'onduleur (3) comprenant un deuxième capteur de température (16) destiné à mesurer une température ambiante,
dans lequel :
- lorsque l'on commande l'onduleur (3) en mode alternateur pour alimenter un réseau électrique de bord (7), on compare les valeurs des températures mesurées par le premier (14) et le deuxième (16) capteurs de température et,
- on détecte une mesure erronée du premier capteur de température (14) lorsque l'écart entre les valeurs des températures mesurées par le premier (14) et le deuxième (16) capteur de température est inférieur à un écart prédéterminé (ΔT) après un temps de fonctionnement prédéterminé (Δt3) d'utilisation de l'onduleur (3) en mode alternateur.

11. Procédé de commande selon la revendication 10 dans lequel :
- on mesure le courant transmis au niveau des enroulements de phase statoriques,
- après une durée prédéterminée (Δt'), on incrémente un compteur avec une valeur d'incrément dépendant de la valeur du courant mesuré,
- lorsque le compteur atteint une valeur prédéterminé, si l'intervalle de temps de fonctionnement prédéterminé (Δt3) est écoulé, on effectue l'étape de comparaison entre les valeurs des températures mesurées par le premier (14) et le deuxième (16) capteurs de température,
- si l'écart entre les mesures est inférieur à un seuil prédéterminé,
- on émet une alarme, on réduit la puissance transmise au niveau des enroulements de phase statoriques et on remet à zéro le compteur,
sinon,
- on remet à zéro le compteur.

12. Procédé selon la revendication 11 dans lequel pour réduire la puissance transmise au niveau des enroulements de phase statoriques, on inhibe la fonction de freinage récupératif.

## Patentansprüche

1. Startergenerator (1) eines Kraftfahrzeugs, welcher umfasst:
- Statorphasenwicklungen,
- einen Wechselrichter (3), der mit den Statorphasenwicklungen verbunden ist und dafür ausgelegt ist, während eines Betriebs im Generatorbetrieb ein elektrisches Bordnetz (7) zu versorgen,
- einen ersten Temperatursensor (14), der dafür ausgelegt ist, die Temperatur der Statorphasenwicklungen zu messen,
- ein Steuerungsmodul (11) des Wechselrichters (3), das einen zweiten Temperatursensor (16) umfasst, der dazu bestimmt ist, die Umgebungstemperatur zu messen,
**dadurch gekennzeichnet, dass** das Steuerungsmodul (11) dafür ausgelegt ist, die Werte der vom ersten (14) und zweiten (16) Temperatursensor gemessenen Temperaturen während eines Betriebs im Generatorbetrieb zu vergleichen und anhand dieses Vergleichs eine fehlerhafte Messung des ersten Temperatursensors (14) zu erkennen.

2. Startergenerator (1) nach Anspruch 1, wobei der erste Sensor (14) an den Statorwicklungen angeordnet ist und der zweite Sensor (16) in einem Abstand von mindestens fünf Zentimetern von den Statorwicklungen angeordnet ist.

3. Startergenerator (1) nach Anspruch 1 oder 2, wobei eine fehlerhafte Messung des ersten Temperatursensors (14) erkannt wird, wenn die gemessene Temperaturdifferenz zwischen dem ersten (14) und dem zweiten (16) Temperatursensor nach einem vorbestimmten Zeitintervall des Betriebs (Δt3) kleiner als ein vorbestimmter Schwellenwert (ΔT) ist.

4. Startergenerator (1) nach einem der vorhergehenden Ansprüche, wobei das Steuerungsmodul (11) dafür ausgelegt ist, einen Alarm auszugeben, wenn eine fehlerhafte Messung des ersten Temperatursensors (14) erkannt wird.

5. Startergenerator (1) nach einem der vorhergehenden Ansprüche, wobei das Steuerungsmodul (11) dafür ausgelegt ist, den am Wechselrichter (3) übertragenen Strom im Generatorbetrieb zu begrenzen, um die Temperatur an den Statorphasenwicklungen zu begrenzen, wenn eine oder mehrere fehlerhafte Messungen des ersten Temperatursensors (14) erkannt werden.

6. Startergenerator (1) nach Anspruch 5, wobei das Steuerungsmodul (11) dafür ausgelegt ist, einen regenerativen Bremsbetrieb zu verhindern, um den am Wechselrichter (3) im Generatorbetrieb übertragenen Strom zu begrenzen.

7. Startergenerator (1) nach einem der vorhergehenden Ansprüche, wobei der erste Temperatursensor (14) an einem elastischen Element befestigt ist, wobei das elastische Element dafür ausgelegt ist, den ersten Temperatursensor (14) in Kontakt mit den Statorphasenwicklungen zu drücken.

8. Startergenerator (1) nach einem der vorhergehenden Ansprüche, welcher außerdem eine Messeinheit (18) für den an den Statorphasenwicklungen übertragenen Strom umfasst, wobei das Steuerungsmodul (11) dafür ausgelegt ist:
- einen Zähler um einen Inkrementwert zu inkrementieren, der vom Wert des während einer vorbestimmten Dauer (Δt') gemessenen Stroms abhängig ist,
falls das vorbestimmte Zeitintervall des Betriebs (Δt3) vergangen ist,
- die Werte der vom ersten (14) und zweiten (16) Temperatursensor gemessenen Temperaturen zu vergleichen, wenn der Zähler einen vorbestimmten Wert erreicht,
- einen Alarm auszugeben und die an den Statorphasenwicklungen übertragene Leistung zu verringern, falls die Abweichung zwischen den Werten der vom ersten (14) und zweiten (16) Temperatursensor gemessenen Temperaturen kleiner als ein vorbestimmter Schwellenwert (ΔT) ist,
- den Zähler auf null zurückzusetzen.

9. Kraftfahrzeug, welches einen Startergenerator (1) nach einem der vorhergehenden Ansprüche umfasst.

10. Verfahren zur Steuerung eines Startergenerators (1) für ein Kraftfahrzeug, wobei der Startergenerator (1) umfasst:
- Statorphasenwicklungen,
- einen Wechselrichter (3), der mit den Statorphasenwicklungen verbunden ist und dafür ausgelegt ist, während eines Betriebs im Generatorbetrieb ein elektrisches Bordnetz (7) mit Strömen zu versorgen, die an den Statorphasenwicklungen übertragen werden,
- einen ersten Temperatursensor (14), der dafür ausgelegt ist, die Temperatur der Statorphasenwicklungen zu messen,
- ein Steuerungsmodul (11) des Wechselrichters (3), das einen zweiten Temperatursensor (16) umfasst, der dazu bestimmt ist, die Umgebungstemperatur zu messen,
wobei:
- wenn der Wechselrichter (3) im Generatorbetrieb gesteuert wird, um ein elektrisches Bordnetz (7) zu versorgen, die Werte der vom ersten (14) und zweiten (16) Temperatursensor gemessenen Temperaturen verglichen werden und
- eine fehlerhafte Messung des ersten Temperatursensors (14) erkannt wird, wenn nach einer vorbestimmten Betriebsdauer (Δt3) der Verwendung des Wechselrichters (3) im Generatorbetrieb die Abweichung zwischen den Werten der vom ersten (14) und zweiten (16) Temperatursensor gemessenen Temperaturen kleiner als eine vorbestimmte Abweichung (ΔT) ist.

11. Verfahren zur Steuerung nach Anspruch 10, wobei:
- der an den Statorphasenwicklungen übertragene Strom gemessen wird,
- nach einer vorbestimmten Dauer (Δt') ein Zähler um einen Inkrementwert inkrementiert wird, der vom Wert des gemessenen Stroms abhängig ist,
- wenn der Zähler einen vorbestimmten Wert erreicht, falls das vorbestimmte Zeitintervall des Betriebs (Δt3) vergangen ist, der Schritt des Vergleichs zwischen den Werten der vom ersten (14) und zweiten (16) Temperatursensor gemessenen Temperaturen durchgeführt wird,
- falls die Abweichung zwischen den Messungen kleiner als ein vorbestimmter Schwellenwert ist,
- ein Alarm ausgegeben wird, die an den Statorphasenwicklungen übertragene Leistung verringert wird und der Zähler auf null zurückgesetzt wird,
andernfalls
der Zähler auf null zurückgesetzt wird.

12. Verfahren nach Anspruch 11, wobei, um die an den Statorphasenwicklungen übertragene Leistung zu verringern, die regenerative Bremsfunktion blockiert wird.

## Claims

1. Motor vehicle alternator-starter (1) comprising:
- stator phase windings,
- an inverter (3) connected to the stator phase windings and configured to supply an on-board electrical network (7) during an operation in alternator mode,
- a first temperature sensor (14) configured to measure the temperature of the stator phase windings,
- a control module (11) for controlling the inverter (3), comprising a second temperature sensor (16) intended to measure the ambient temperature,
**characterized in that** the control module (11) is configured to compare the values of the temperatures measured by the first (14) and the second (16) temperature sensors during an operation in alternator mode and to detect an erroneous measurement of the first temperature sensor (14) from said comparison.

2. Alternator-starter (1) according to Claim 1, in which the first sensor (14) is arranged at the stator windings and the second sensor (16) is arranged at a distance of at least five centimetres from the stator windings.

3. Alternator-starter (1) according to Claim 1 or 2, in which an erroneous measurement of the first temperature sensor (14) is detected when the temperature difference measured between the first (14) and the second (16) temperature sensors is less than a predetermined threshold (ΔT) after a predetermined operating time interval (Δt3).

4. Alternator-starter (1) according to one of the preceding claims, in which the control module (11) is configured to emit an alarm when an erroneous measurement of the first temperature sensor (14) is detected.

5. Alternator-starter (1) according to one of the preceding claims, in which the control module (11) is configured to limit the current transmitted at the inverter (3) in alternator mode so as to limit the temperature at the stator phase windings when one or more erroneous measurements of the first temperature sensor (14) are detected.

6. Alternator-starter (1) according to Claim 5, in which the control module (11) is configured to inhibit a regenerative braking mode to limit the current transmitted at the inverter (3) in alternator mode.

7. Alternator-starter (1) according to one of the preceding claims, in which the first temperature sensor (14) is fastened to an elastic element, said elastic element being configured to constrain the first temperature sensor (14) into contact with the stator phase windings.

8. Alternator-starter (1) according to one of the preceding claims, also comprising a measurement unit (18) for measuring the current transmitted at the stator phase windings, the control module (11) being configured to:
- increment a counter with an increment value dependent on the value of the current measured during a predetermined period (Δt'),
if the predetermined operating time interval (Δt3) has elapsed,
- compare the values of the temperatures measured by the first (14) and the second (16) temperature sensors when the counter reaches a predetermined value,
- emit an alarm and reduce the power transmitted at the stator phase windings if the difference between the values of the temperatures measured by the first (14) and the second (16) temperature sensors is less than a predetermined threshold (ΔT),
- reset the counter to zero.

9. Motor vehicle comprising an alternator-starter (1) according to one of the preceding claims.

10. Method for controlling an alternator-starter (1) for a motor vehicle, said alternator-starter (1) comprising:
- stator phase windings,
- an inverter (3) connected to the stator phase windings configured to supply an on-board electrical network (7) from currents transmitted at the stator phase windings during an operation in alternator mode,
- a first temperature sensor (14) configured to measure the temperature of the stator phase windings,
- a control module (11) for controlling the inverter (3), comprising a second temperature sensor (16) intended to measure an ambient temperature,
wherein:
- when the inverter (3) is controlled in alternator mode to supply an on-board electrical network (7), the values of the temperatures measured by the first (14) and the second (16) temperature sensors are compared, and
- an erroneous measurement of the first temperature sensor (14) is detected when the difference between the values of the temperatures measured by the first (14) and the second (16) temperature sensor is less than a predetermined difference (ΔT) after a predetermined operating time (Δt3) of use of the inverter (3) in alternator mode.

11. Control method according to Claim 10, in which:
- the current transmitted at the stator phase windings is measured,
- after a predetermined duration (Δt'), a counter is incremented with an increment value dependent on the value of the measured current,
- when the counter reaches a predetermined value, if the predetermined operating time interval (Δt3) has elapsed, the step of comparison between the values of the temperatures measured by the first (14) and the second (16) temperature sensors is carried out,
- if the difference between the measurements is less than a predetermined threshold,
- an alarm is emitted, the power transmitted at the stator phase windings is reduced and the counter is reset to zero,
otherwise,
- the counter is reset to zero.

12. Method according to Claim 11, in which, to reduce the power transmitted at the stator phase windings, the regenerative braking function is inhibited.
